# FASCICULE DE BREVET EUROPEEN

(11) **EP 3 463 806 B1**
(45) Date de publication et mention de la délivrance du brevet: **03.08.2022**
(21) Numéro de dépôt: 17732520.6
(22) Date de dépôt: 02.06.2017
(51) Int. Cl.: B29C 59/02, B64C 1/00, B64C 21/10

(54) **PROCÉDÉ DE FORMATION D'UN RIBLET SUR UNE PIÈCE ET MOULE DE RIBLET**
VERFAHREN ZUR FORMUNG EINER RIPPE AUF EINER KOMPONENTE UND RIPPENFORM
METHOD FOR FORMING A RIBLET ON A COMPONENT AND RIBLET MOULD

(30) Priorité: 03.06.2016 FR 1655056
(43) Date de publication de la demande: 10.04.2019
(73) Titulaire: Safran, 75015 Paris (FR)
(72) Inventeur: LANFANT, Nicolas Pierre, 77550 Moissy-Cramayel (FR); CASTAGNET, Florence, 77550 Moissy-Cramayel (FR); CHAUVIN, Thierry, 77550 Moissy-Cramayel (FR); GONCALVES, Emilie, 77550 Moissy-Cramayel Cedex (FR); PICCIRELLI, Nicola, 77550 Moissy-Cramayel (FR); SORGNARD, Loïc, 77550 Moissy-Cramayel (FR)
(74) Mandataire: Regimbeau
(86) Numéro de dépôt international: PCT/FR2017/051404
(87) Numéro de publication internationale: WO 2017/207948

(56) Documents cités:
- FR-A1- 3 004 364
- US-A1- 2005 150 589
- US-A1- 2007 257 400

## Description

### DOMAINE DE L'INVENTION

La présente invention concerne un procédé de formation d'un riblet sur une pièce, et un moule de riblet.

### ETAT DE LA TECHNIQUE

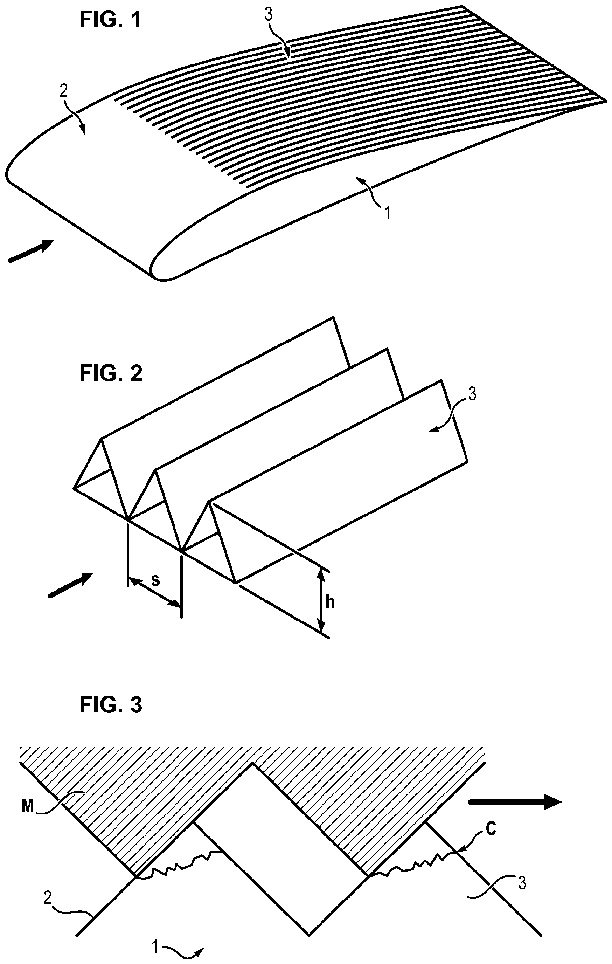

En référence à la **figure 1****,** une pièce 1 conventionnelle destinée à être immergée dans un fluide en mouvement comprend une surface 2 dans laquelle sont formés des riblets 3. Les riblets 3 sont des rainures microscopiques s'étendant parallèlement au sens d'écoulement du fluide, ayant pour effet de diminuer les frottements du fluide à la surface 2 de la pièce 1 et, par conséquent, de diminuer la trainée induite. Les riblets 3 permettent ainsi d'améliorer les performances aérodynamiques de la pièce 1.

Les riblets 3 sont généralement de forme trapézoïdale, de forme en créneau, ou de forme triangulaire comme représenté en **figure 2****.** Ils sont caractérisés par une hauteur h, de l'ordre de 10 à 50 µm une largeur s du même ordre de grandeur.

On connaît de l'état de la technique plusieurs procédés pour former des riblets à la surface d'une pièce.

Selon un premier procédé connu, un riblet est d'abord formé par calandrage sur un film de support, qui est fixé sur une pièce préalablement constituée.

Toutefois, une telle fixation présente l'inconvénient de requérir une grande précision. Il est en effet nécessaire que les riblets soient correctement orientés par rapport au sens d'écoulement du fluide dans lequel la pièce est destinée à être immergée.

Or, si le film de support est trop rigide, il est difficile à fixer sur la pièce. *A contrario,* si le film de support est trop souple, il existe un risque important de déformer les riblets lors de l'application de ce film de support sur une pièce dont la surface est non développable (risque d'écarter localement les sillons, d'obtenir une direction en écart par rapport à une spécification donnée et de déformer la section des riblets).

De plus, la fixation d'un tel film de support est particulièrement malaisée sur une pièce de forme complexe, en particulier une pièce requérant des riblets non linéaires et dont les directions évoluent le long de la surface de la pièce. L'impression des riblets sur un film découpé à la forme de la pièce pourrait être envisagée, mais rendrait d'autant plus complexe la pose dudit film sur la pièce.

Il existe également un risque d'écraser les riblets formés sur le film de support au cours de sa fixation à la pièce. Pour éviter un tel écrasement, il a été proposé de mettre en place un liner de protection lors de la fixation. Cependant, ce liner apporte une grande rigidité au film et l'on se retrouve dans la situation précédente où il est difficile d'appliquer le film sur une surface courbée voire non développable.

Enfin, ce premier procédé connu présente comme autre inconvénient de nécessiter un double contrôle de qualité des riblets, lorsque le film de support est fourni par un fournisseur : il convient en effet de procéder à un premier contrôle du film fourni, puis à un deuxième contrôle après fixation sur la pièce.

Selon un deuxième procédé connu, la formation de riblets sur une pièce est réalisée par moulage, et plus précisément au cours du moulage de la pièce elle-même.

Un moule à injection est utilisé pour mouler la pièce. Le moule a injection, relativement complexe, comprend plusieurs blocs, au moins un de ces blocs comprenant une empreinte de la pièce (et notamment une empreinte des riblets). Pour mouler la pièce, le moule est placé sous presse et une résine est injectée sous pression. Selon la résine injectée, les températures et pressions maximales peuvent être élevées et les paliers atteignent parfois plusieurs heures. Dans ces conditions, le moule à injection est fortement sollicité (il est en effet soumis à des dilatations et relaxations successives).

Or, l'opération de démoulage de la pièce est particulièrement délicate à mettre en œuvre.

Premièrement, la présence des riblets sur la pièce obtenue à l'issue de l'injection augmente les frottements entre cette pièce et le moule. Pour faciliter le démoulage, il a été proposé d'utiliser un agent démoulant (d'une épaisseur de quelques dizaines de microns). Toutefois, le dépôt d'un tel agent démoulant est susceptible d'affecter la forme finale des riblets et donc de dégrader les performances aérodynamiques de la pièce.

Deuxièmement, le démoulage engendre des efforts de cisaillement sur les riblets. La **figure 3** illustre ce phénomène de cisaillement provoqué par le moule M sur des riblets 3 de profil triangulaire. Ces efforts sont susceptibles de générer des fissures dans les bases des riblets 3 ou leur écrêtage. Cela affecte les performances aérodynamiques de la pièce avant même sa mise en service et par là même remet en cause le principe des riblets.

Le document FR 3 004 364 A1 décrit un procédé de formation d'un riblet sur une pièce selon le préambule de la revendication 1 ainsi qu'un outillage pour la formation d'un riblet sur une pièce afin de rendre ladite pièce plus aérodynamique.

Le document US 2005/150589 A1 décrit une poche placée dans une enceinte étanche. Des extrémités libres de la poche sont ensuite scellées de manière étanche, avant que la pression dans l'enceinte ne soit augmentée. L'augmentation de la pression à l'extérieur de la poche fournit le travail de pression permettant d'imprimer un motif sur une pièce.

### EXPOSE DE L'INVENTION

Un but de l'invention est de minimiser la dégradation des performances aérodynamique d'une pièce comportant des riblets, au cours de sa fabrication.

Il est ainsi proposé, selon un premier aspect, un procédé de formation d'un riblet sur une pièce, caractérisé en ce qu'il comprend des étapes de : insertion de la pièce à l'intérieur d'une bâche à vide, impression du riblet sur la pièce, comprenant une application d'un film comprenant une empreinte de riblet sur la pièce, dans lequel l'impression comprend la mise sous vide de la bâche à vide par aspiration d'air contenu dans la bâche à vide au moyen d'une pompe à vide, de sorte que, grâce à l'aspiration, la bâche à vide presse le film contre la pièce, pelage du film de sorte à séparer l'empreinte de riblet de la pièce, après l'impression.

Il est ainsi également proposé, selon un deuxième aspect, une bâche à vide comprenant une poche, une pompe à vide configurée pour aspirer de l'air contenu dans la poche et un moule de riblet comprenant un film dans lequel est formée une empreinte de riblet, le film étant adapté pour être séparé d'une pièce, sur laquelle un riblet a été imprimé au moyen du moule de riblet, par pelage du film, l'empreinte de riblet étant formée dans la surface interne de la poche.

Le caractère flexible du film dans lequel l'empreinte de riblet est formée lui permet d'être retiré de la pièce une fois le riblet imprimé, sans pour autant provoquer de phénomènes de cisaillements aussi important que ceux rencontrés lorsqu'un moule à injection est utilisé, et ce quelle que soit la direction du pelage.

Le procédé de formation de riblet peut également comprendre les caractéristiques suivantes prises seules ou en combinaison lorsque cela est techniquement possible.

Le procédé comprend une insertion de la pièce à l'intérieur d'une bâche à vide, l'impression comprenant la mise sous vide de la bâche à vide de sorte que la bâche à vide presse le film contre la pièce. L'utilisation d'une telle bâche à vide au cours de l'impression est avantageuse car les parois de la poche exercent une pression uniforme sur toute la surface de l'empreinte de riblet. Les riblets ainsi obtenus sont donc particulièrement réguliers, et ce même lorsque la surface de la pièce considérée est de forme complexe (en particulier non plane).

Le film peut être une paroi de la bâche à vide. Il n'est ainsi pas besoin d'insérer dans la bâche à vide un film en sus de la pièce sur laquelle le riblet doit être formé, ce qui simplifie la mise en œuvre du procédé.

L'impression peut comprendre une pression du film contre la pièce au moyen d'un outil situé à l'extérieur de la bâche à vide. L'utilisation de cet outil permet d'apporter une force de pression supplémentaire à celle fournie par la bâche à vide.

L'impression peut comprendre un chauffage de la pièce et du film, lorsque le film est appliqué contre la pièce.

L'impression peut comprendre l'application d'un revêtement anti-érosion sur la pièce, le riblet étant imprimé dans le revêtement anti-érosion.

Le revêtement anti-érosion peut être constitué d'une peinture et/ou d'un polymère.

Le film peut être constitué d'un élastomère ou d'un polycarbonate.

Le riblet formant sur la pièce une rainure s'étendant suivant une direction longitudinale, le pelage du film peut être effectué suivant la direction longitudinale ou suivant une direction perpendiculaire à la direction longitudinale. Ces deux directions de pelage alternatives permettent chacune de réduire au maximum des risques de cisaillement résiduels de la surface de la pièce imprimés, et permettent donc d'obtenir des riblets parfaitement aérodynamiques.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 illustre en vue de trois quarts une pièce aérodynamique comprenant des riblets.
- La figure 2 représente un type de riblets connu.
- La figure 3 est une vue en coupe d'une partie de moule à injection, et d'un riblet en cours de démoulage.
- Les figures 4 et 5 sont des organigrammes d'étapes d'un procédé de formation d'un riblet sur une pièce selon un mode de réalisation de l'invention.
- La figure 6 est une vue de profil d'un moule de riblet selon un mode de réalisation de l'invention.
- La figure 7 comprend deux vues de trois quarts d'une pièce au cours de sa fabrication conformément à un procédé selon un mode de réalisation de l'invention.
- La figure 8 comprend quatre vues en coupe d'une pièce et d'un moule utilisé pour l'impression de riblets sur la pièce, conformément à un mode de réalisation de l'invention.
- La figure 9 est une vue en coupe d'un moule de riblet et d'un riblet en cours d'une étape de démoulage selon un premier mode de réalisation de l'invention.
- La figure 10 est une vue de trois quarts d'un moule de riblet et d'un riblet en cours d'une étape de démoulage selon un deuxième mode de réalisation de l'invention.

Sur l'ensemble des figures, les éléments similaires portent des références identiques.

### DESCRIPTION DETAILLEE D'UN MODE DE REALISATION DE L'INVENTION

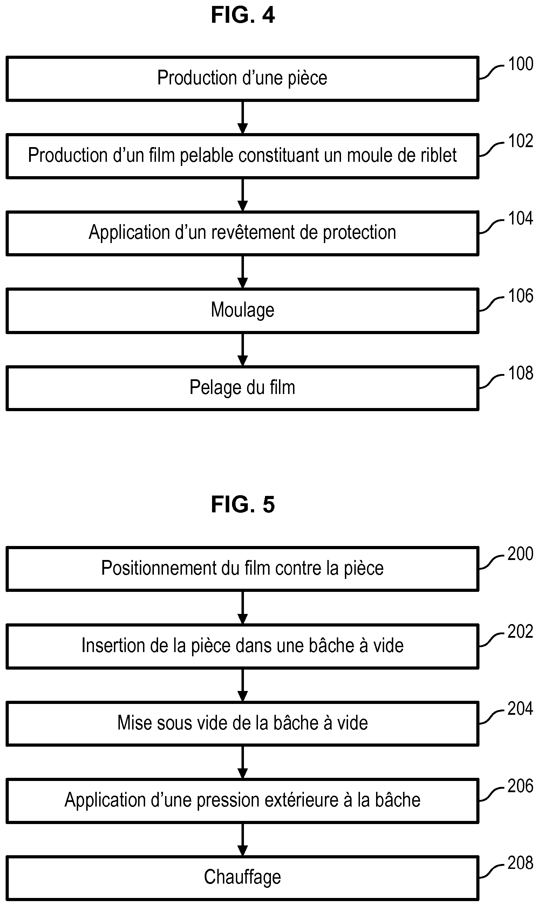

En référence à la **figure 4****,** une pièce aérodynamique, telle que celle représentée sur la figure 1 déjà discutée, est fabriqué au moyen des étapes suivantes.

Dans une étape 100, est fabriquée la pièce brute 1 comprenant une surface 2 sur laquelle on souhaite former des riblets 3. La pièce 1 est par exemple une partie de fuselage d'un aéronef.

Cette fabrication 100 est mise en œuvre par fonderie, par usinage dans la masse pour une pièce métallique, par moulage, par estampage pour une pièce composite, etc.

Dans une étape 102, est fabriqué un film 4 comprenant une première surface 5 dans laquelle une empreinte de riblet 6 est formée.

L'empreinte de riblet 6 présente un profil complémentaire à celui d'un riblet 3.

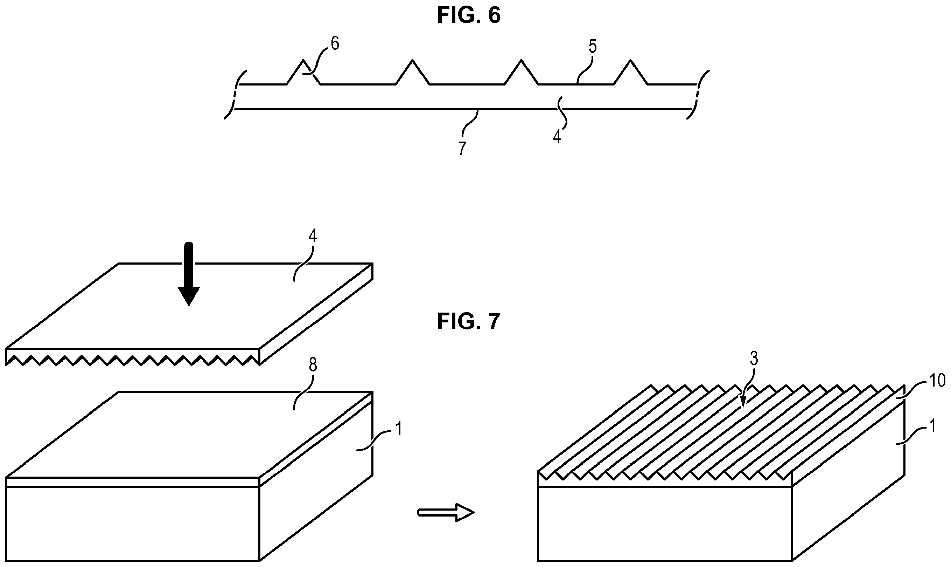

Par exemple, dans le mode de réalisation représenté en **figure 6****,** l'empreinte de riblet 6 comprend une pluralité de nervures de profil triangulaire. Les nervures s'étendent parallèlement les unes aux autres. Les nervures sont espacées les unes des autres par des portions planes de la surface 5. D'autres formes d'empreinte de riblet 6, adaptées pour imprimer des riblets de formes différentes (en créneau ou trapézoïdaux) peuvent bien évidemment être utilisées.

Le film 4 présente également une deuxième surface 7 opposée à la première surface 5. La deuxième surface 7 est plane.

Le film 4 présente une rigidité adaptée pour que le film ne se déforme pas lors de l'application et lors d'une mise sous pression à 5 bars, et pour résister à une traction manuelle lors d'une étape de pelage qui sera décrite plus loin.

Il présente en outre adaptée une souplesse suffisante pour épouser toutes la surface de la pièce (en tenant compte, par exemple des retassures potentiellement présentes à la surface de pièces composites).

Le film 4 est par exemple constitué d'élastomère, par exemple du silicone ou du fluoro-polymère ou du polyuréthane. Alternativement, le film 4 est en polycarbonate, qui est un matériau plus rigide qu'un élastomère. En variante, le film 4 est constitué d'un polymère ou en métal.

Le film 4 présente une épaisseur entre ses deux surfaces opposées 5 et 7 comprise entre 0,1 et 0,5 millimètres, de préférence 0,3 millimètres.

Dans une étape 104, est appliqué à la surface 2 de la pièce 1 un revêtement de protection anti-érosion 8.

L'application de ce revêtement anti-érosion 8 comprend une préparation préliminaire de ladite surface 2. Cette préparation comprend un sablage, un dégraissage, et/ou un ponçage de la surface 2 de la pièce 1. Cette préparation a pour effet d'améliorer l'adhérence du revêtement anti-érosion sur la surface 2 de la pièce 1.

Une solution est appliquée sur la surface 2 ainsi préparée, de sorte à former le revêtement anti-érosion.

Le revêtement anti-érosion 8 est constitué d'un matériau susceptible d'être marqué lorsqu'on lui applique une pression.

Le revêtement anti-érosion 8 peut être constitué d'un film de polymère (polyuréthane ou fluoro-polymère par exemple), ou bien d'un matériau thermoplastique. Le revêtement anti-érosion 8 peut en outre être une peinture.

Le revêtement anti-érosion 8 est fixé à la surface 2 de la pièce 1 par collage, par exemple au moyen d'un film de colle avec primaire d'accroche dans le cas d'une pièce 1 métallique.

Des riblets 3 sont ensuite imprimés 106 dans le revêtement anti-érosion 8 appliqué sur la pièce 1 à l'aide du film 4.

Dans un mode de réalisation particulier dont les étapes sont illustrées en **figure 5****,** l'impression comprend les sous-étapes suivantes.

Le film est positionné 200 par rapport à la pièce 1, de sorte que l'empreinte de riblet 6 formée dans le film 4 soit en regard du revêtement anti-érosion 8, comme représenté sur la **figure 7****.**

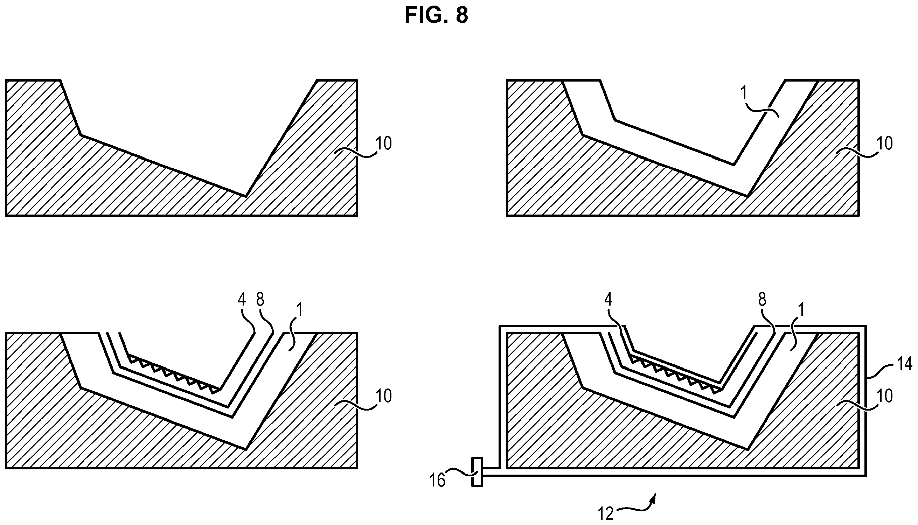

Par exemple, comme représenté en **figure 8****,** la pièce est placée dans une cavité d'un élément de support 10, par exemple en mousse. La première surface 5 du film 4 est positionnée en regard du revêtement anti-érosion 8 préalablement appliqué sur la pièce 1. De la sorte, la pièce 1 est prise en sandwich entre l'élément de support 10 et le film 4.

De façon connue en elle-même, une bâche à vide 12 comprend une poche 14 et une pompe à vide 16 configurée pour aspirer l'air contenu dans la poche 14 et y faire le vide.

La pièce 1 est insérée à l'intérieur de la poche 14 de la bâche à vide 12, de même que le film 4.

La bâche à vide est mise sous vide au cours d'une étape 204 pendant que la pièce 1 et le film 4 se trouvent à l'intérieur de la poche 14. Pour ce faire, la pompe à vide 16 est activée de sorte à aspirer l'air à l'intérieur de la poche 14. Grâce à cette aspiration, les parois de la poche 14 de la bâche à vide 12 sont pressées contre la deuxième surface 7 du film 4. L'empreinte de riblet 6 formée dans la première surface 5 du film 4, opposée à la surface 7, est alors sollicitée de façon à imprimer des riblets 3 dans le revêtement anti-érosion 8. Les riblets 3 présentent une forme complémentaire à l'empreinte de riblet 6.

L'utilisation de la bâche à vide 12 au cours de l'impression 106 est avantageuse car les parois de la poche exercent une pression uniforme sur toute la surface de l'empreinte de riblet 6. Les riblets 3 ainsi obtenus sont donc particulièrement réguliers, et ce même lorsque la surface 2 est de forme complexe (en particulier non plane).

A titre complémentaire, une pression peut être exercée 206 à l'aide d'un outil de pressage situé à l'extérieur de la bâche à vide 12. L'outil presse contre la surface externe de la poche 14, la poche 14 presse alors contre la deuxième surface 7 du film 5 contenu dans la poche, et l'empreinte de riblet 6 formée sur la surface 5 s'imprime avec plus de force dans le revêtement anti-érosion 8. L'outil de pressage comprend par exemple un système de visserie et/ou un vérin.

La pression de l'empreinte de riblet 5 contre le revêtement anti-érosion 8 (suscitée par la pompe à vide 16 et/ou l'outil de pressage situé à l'extérieur de la poche 14) est maintenue pendant une période de durée prédéterminée.

Le film 5 et la pièce 1 peuvent en outre être chauffés 208 et maintenus à une température d'impression, au cours de cette période de durée prédéterminée.

Par exemple, la poche 14 de la bâche à vide 12 contenant le film 5 et la pièce 1 est placée dans un four mettant en œuvre le chauffage 208.

Alternativement, le chauffage 208 est mis en œuvre avant l'impression 106. Ceci est avantageux pour ramollir le revêtement anti-érosion 8, lorsque celui-ci s'est solidifié sur la surface 2 de la pièce 1. Une telle solidification peut par exemple survenir typiquement dans le cas où le revêtement anti-érosion 8 est une peinture ou est constituée d'un thermoplastique.

La bâche à vide 12 est ensuite ouverte. L'on retire de la poche 14 un bloc constitué de la pièce 1, du revêtement anti-érosion 8 et du film 4.

La forme des riblets 3 imprimés dans le revêtement anti-érosion 8 est conforme à l'état de la technique. Les riblets 3 forment ainsi des rainures s'étendant suivant une direction longitudinale X, complémentaires aux nervures de l'empreinte de riblet 6. On prendra dans ce qui suit l'exemple de riblets 3 de profil triangulaire. Dans le cas où la surface 2 est plane, les riblets 3 présentent des crêtes parallèles à la direction longitudinale X.

La pièce est ensuite démoulée, c'est-à-dire que la pièce 1 est séparée du film ayant servi au cours de l'impression 106.

Le démoulage comprend un pelage du film 4 afin de le séparer du revêtement anti-érosion 8, et ainsi dévoiler les riblets 3 formés dans le revêtement anti-érosion 8.

Le pelage consiste à pincer une extrémité du film 4 manuelle ou à l'aide d'un outil de préhension, et de déplacer cette extrémité du film 4 par rapport à la pièce 1 de sorte à déformer le film 4 et dévoiler progressivement suivant une direction, qualifiée ci-après direction de pelage, les riblets 3 formés sur la pièce 1.

Le caractère flexible du film 4 dans lequel l'empreinte de riblet 5 est formée permet de réduire de façon très significative les phénomènes de cisaillements rencontrés lorsqu'un moule à injection est utilisé, et ce quelle que soit la direction de pelage choisie.

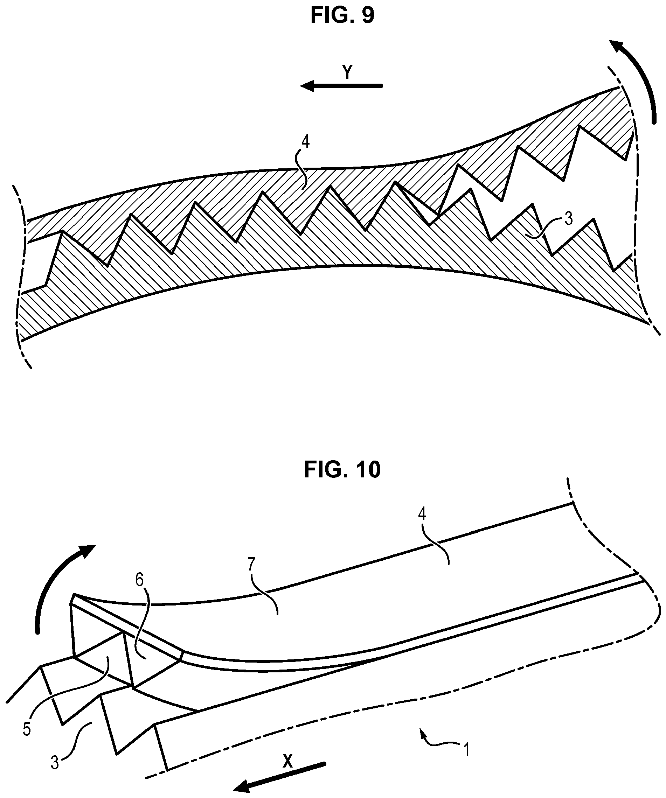

Comme illustré en **figure 9****,** la direction de pelage peut être une direction Y orthogonale à la direction longitudinale X des riblets 3. En variante illustrée en **figure 10****,** la direction de pelage est la direction longitudinale X des riblets 3. Ces deux directions de pelage X ou Y permettent chacune de réduire au maximum les risques de cisaillement résiduels, et permettent donc d'obtenir des riblets 3 parfaitement aérodynamiques.

Par ailleurs, le pelage 108 peut être manuel ou assisté, quelle que soit la direction de pelage choisie.

Lorsque le film 8 est constitué d'un polymère, le film 8 présente une résistance et une souplesse particulièrement adaptée pour permettre son retrait par pelage en maintenant la structure des riblets 3 (peu de contraintes sont alors exercées sur les riblets 3).

Un avantage du procédé ainsi mis en œuvre est que la qualité peut n'être contrôlée qu'une seule fois (après l'étape de pelage 108). L'amélioration de la qualité des riblets 3 et de la répétabilité de pose permet également d'augmenter la fréquence des échantillonnages. Augmenter la fréquence d'échantillonnage permet donc également d'abaisser le cout de production de la pièce.

L'invention ne se limite pas aux modes de réalisation décrits en relation avec les figures, mais peut faire l'objet d'autres variantes comme définies dans les revendications.

Les riblets 3 peuvent être directement formés à la surface 2 de la pièce, et non dans un revêtement anti-érosion 8. Dans une telle variante, la pièce peut être préalablement chauffée, de sorte que le matériau dans lequel la surface 2 est formée est suffisamment ramolli pour que les riblets 3 puissent y être imprimés 106.

En variante, le film 4 fait partie de la poche de la bâche à vide. La première surface 5 dans laquelle l'empreinte de riblet 6 est formée peut être une portion de la surface interne de la poche 14 de la bâche à vide 12. Dans une telle variante, il n'y a pas besoin d'insérer un film 4 à l'intérieur de la bâche à vide 12, ce qui simplifie la mise en œuvre de l'impression 106 des riblets 3.

Dans une autre variante, aucune bâche à vide n'est utilisée pour presser le film 4 sur la pièce 1. Ce pressage est mis en œuvre à l'aide d'autres moyens de pressage.

## Revendications

1. Procédé de formation d'un riblet (3) sur une pièce (1), **caractérisé en ce qu'**il comprend des étapes de :
• insertion de la pièce (1) à l'intérieur d'une bâche à vide (12),
• impression (106) du riblet sur la pièce (1), comprenant une application d'un film (4) comprenant une empreinte de riblet (6) sur la pièce (1), dans lequel l'impression (106) comprend la mise sous vide de la bâche à vide (12) par aspiration d'air contenu dans la bâche à vide au moyen d'une pompe à vide (16), de sorte que, grâce à l'aspiration, la bâche à vide (12) presse le film (4) contre la pièce (1),
• pelage (108) du film (4) de sorte à séparer l'empreinte de riblet (6) de la pièce (1), après l'impression (106).

2. Procédé selon la revendication précédente, dans lequel le film (4) est une paroi de la bâche à vide (12).

3. Procédé selon l'une des revendications précédentes, dans lequel l'impression (106) comprend une pression (206) du film (4) contre la pièce (1) au moyen d'un outil situé à l'extérieur de la bâche à vide (12).

4. Procédé selon la revendication précédente, dans lequel l'impression (106) comprend un chauffage de la pièce (1) et du film (4), lorsque le film (4) est appliqué contre la pièce (1).

5. Procédé selon l'une des revendications précédentes, comprenant l'application (104) d'un revêtement anti-érosion sur la pièce (1), le riblet (3) étant imprimé (106) dans le revêtement anti-érosion (8).

6. Procédé selon la revendication précédente, dans lequel le revêtement anti-érosion est constitué d'une peinture et/ou d'un polymère.

7. Procédé selon l'une des revendications précédentes, dans lequel le film (4) est constitué d'un élastomère ou d'un polycarbonate.

8. Procédé selon l'une des revendications précédentes, dans lequel le riblet (3) forme sur la pièce (1) une rainure s'étendant suivant une direction longitudinale (X), et dans lequel le pelage du film (4) est effectué suivant la direction longitudinale (X) ou suivant une direction (Y) perpendiculaire à la direction longitudinale (X).

9. Bâche à vide (12) comprenant
• une poche (14),
• une pompe à vide (16) configurée pour aspirer de l'air contenu dans la poche (14) et
• un moule de riblet (3) comprenant un film (4) dans lequel est formée une empreinte de riblet (6), le film (4) étant adapté pour être séparé d'une pièce (1), sur laquelle un riblet (3) a été imprimé au moyen du moule de riblet (3), par pelage du film (4), l'empreinte de riblet (6) étant formée dans la surface interne de la poche (14).

## Patentansprüche

1. Verfahren zum Formen eines Riblets (3) auf einer Komponente (1), **dadurch gekennzeichnet, dass** es die folgenden Schritte umfasst:
• Einsetzen der Komponente (1) in das Innere eines Vakuumbehälters (12),
• Drucken (106) des Riblets auf die Komponente (1), das das Aufbringen eines Films (4), der eine Riblet-Prägung (6) umfasst, auf der Komponente (1) umfasst, wobei das Drucken (106) das Evakuieren des Vakuumbehälters (12) durch Ansaugen von Luft, die in dem Vakuumbehälter enthalten ist, mittels einer Vakuumpumpe (16) umfasst, derart dass mit Hilfe des Ansaugens der Vakuumbehälter (12) den Film (4) gegen die Komponente (1) drückt,
• Abziehen (108) des Films (4), derart dass die Riblet-Prägung (6) nach dem Drucken (106) von der Komponente (1) getrennt wird.

2. Verfahren nach dem vorhergehenden Anspruch, wobei der Film (4) eine Wand des Vakuumbehälters (12) ist.

3. Verfahren nach einem der vorhergehenden Ansprüche, wobei das Drucken (106) ein Drücken (206) des Films (4) gegen die Komponente (1) mittels eines Werkzeugs ist, das sich außerhalb des Vakuumbehälters (12) befindet.

4. Verfahren nach dem vorhergehenden Anspruch, wobei das Drucken (106) ein Erhitzen der Komponente (1) und des Films (4) umfasst, wenn der Film (4) gegen die Komponente (1) aufgebracht wird.

5. Verfahren nach einem der vorhergehenden Ansprüche, welches das Aufbringen (104) einer Erosionsschutzbeschichtung auf der Komponente (1) umfasst, wobei das Riblet (3) in der Erosionsschutzbeschichtung (8) gedruckt (106) wird.

6. Verfahren nach dem vorhergehenden Anspruch, wobei die Erosionsschutzbeschichtung aus einem Lack und/oder aus einem Polymer besteht.

7. Verfahren nach einem der vorhergehenden Ansprüche, wobei der Film (4) aus einem Elastomer oder aus einem Polycarbonat besteht.

8. Verfahren nach einem der vorhergehenden Ansprüche, wobei das Riblet (3) auf der Komponente (1) eine Rille bildet, die sich entlang einer Längsrichtung (X) erstreckt, und wobei das Abziehen des Films (4) entlang der Längsrichtung (X) oder entlang einer Richtung (Y) senkrecht zur Längsrichtung (X) durchgeführt wird.

9. Vakuumbehälter (12), der umfasst:
• eine Tasche (14),
• eine Vakuumpumpe (16), die dazu ausgestaltet ist, die in der Tasche (14) enthaltene Luft anzusaugen, und
• eine Riblet-Form (3), die einen Film (4) umfasst, in dem eine Riblet-Prägung (6) geformt ist, wobei der Film (4) angepasst ist, von einer Komponente (1), auf der ein Riblet (3) mittels der Riblet-Form (3) gedruckt wurde, durch Abziehen des Films (4) getrennt zu werden, wobei die Riblet-Prägung (6) in der inneren Oberfläche der Tasche (14) gebildet wird.

## Claims

1. A method for forming a riblet on a component, wherein the method comprises:
• inserting the component in a vacuum bag,
• printing the riblet on the component, wherein said printing comprises placing the vacuum bag under vacuum by aspiration of the air contained in the vacuum bag using a vacuum pump so that, thanks to the aspiration, the vacuum bag presses a film comprising a riblet imprint against the component,
• peeling the film so as to separate the riblet imprint from the component, after printing.

2. The method according to claim 1, wherein the film is a wall of the vacuum bag.

3. The method according to claim 1, wherein printing the riblet comprises pressing further the film against the component using a tool situated outside the vacuum bag.

4. The method according to claim 1, further comprising heating the component and the film while the film is applied against the component.

5. The method according to claim 1, comprising applying an anti-erosion coating on the component, wherein the riblet is printed in the anti-erosion coating.

6. The method according to claim 5, wherein the anti-erosion coating consists of a paint and/or of a polymer.

7. The method according to claim 1, wherein the film consists of an elastomer or of a polycarbonate.

8. The method according to claim 1, wherein the riblet forms on the component a groove extending along a longitudinal direction, and wherein the peeling of the film is carried out along the longitudinal direction or following a direction perpendicular to the longitudinal direction.

9. A vacuum bag comprising
• a pouch,
• a vacuum pump configured to aspirate the air contained in the pouch and
• a riblet mould comprising a film in which is formed a riblet imprint, the film being adapted to be separated from a component on which a riblet has been printed using the riblet mould, by peeling the film, the riblet imprint being formed in the internal surface of the pouch (14).
